# EUROPÄISCHE PATENTSCHRIFT

(11) **EP 3 552 900 B1**
(45) Veröffentlichungstag und Bekanntmachung des Hinweises auf die Patenterteilung: **13.03.2024**
(21) Anmeldenummer: 19165261.9
(22) Anmeldetag: 26.03.2019
(51) Int. Cl.: H01H 3/42, H01H 3/46

(54) **VORRICHTUNG ZUM AKTIVIEREN UND DEAKTIVIEREN EINER START-STOPP-AUTOMATIK EINES FAHRZEUGS**
DEVICE FOR ACTIVATING AND DEACTIVATING AN AUTOMATIC START-STOP SYSTEM OF A VEHICLE
DISPOSITIF D'ACTIVATION ET DE DÉSACTIVATION D'UN SYSTÈME AUTOMATIQUE MARCHE-ARRÊT D'UN VÉHICULE

(30) Priorität: 10.04.2018 DE 102018108500; 16.05.2018 DE 102018111744
(43) Veröffentlichungstag der Anmeldung: 16.10.2019
(73) Patentinhaber: Hymer GmbH & Co. KG, 88339 Bad Waldsee (DE)
(72) Erfinder: Buschle, Thomas, 88410 Bad Wurzach (DE); Sawetzki, Bernhard, 88364 Wolfegg (DE)
(74) Vertreter: Müller Schupfner & Partner Patent- und Rechtsanwaltspartnerschaft mbB

(56) Entgegenhaltungen:
- EP-A1- 1 445 784
- EP-A1- 2 599 742
- WO-A1-2016/035266
- DE-B4- 19 982 154
- DE-C1- 10 211 466
- US-A- 5 377 641

## Beschreibung

Die Erfindung betrifft ein Fahrzeug nach dem Oberbegriff des Patentanspruchs 1.

Vorrichtungen zum Aktivieren und Deaktivieren einer Start-Stopp-Automatik von Fahrzeugen sowie Fahrzeuge mit entsprechenden Vorrichtungen zum Aktivieren und Deaktivieren einer Start-Stopp-Automatik sind aus dem Stand der Technik bereits bekannt.

Aus der DE 199 82 154 B4 kennt man bereits ein Verfahren zur Start/Stop-Steuerung eines Kraftfahrzeuges mit automatisierbarer Kupplung.

Die DE 102 11 466 C1 beschreibt ein Kraftfahrzeug und Verfahren zum automatisierten Abschalten und Anlassen eines Verbrennungsmotors.

Aus der DE 10 2012 215 604 A1 ist eine mechanisch wirkende Sicherheitsanordnung für ein gewerbliches Fahrzeug und ein entsprechendes gewerbliches Fahrzeug bekannt.

In diesem Zusammenhang ist es auch bekannt, dass z.B. im Motorraum eine Vorrichtung zum Aktivieren bzw. Deaktivieren einer Start-Stopp-Automatik angeordnet ist, mittels der beispielsweise Unfallgefahren dahingehend reduziert werden sollen, als dass ein Starten des Motors bei geöffneter Motorhaube unterbunden wird. Dies resultiert daraus, dass die Start-Stopp-Automatik bei geöffneter Motorhaube deaktiviert wird, wodurch ein Starten des Motors unmöglich wird. Um einen Startvorgang des Motors durchführen zu können, ist es erforderlich, die Start-Stopp-Automatik mittels der Vorrichtung zu aktivieren. Dies erfolgt in bekannter Weise durch Schließen der Motorhaube, wobei hierdurch ein Betätigungsmittel der Vorrichtung im Wesentlichen durch vertikales Bewegen des Betätigungsmittels zu der Vorrichtung hin und von der Vorrichtung weg durchführbar ist. In entsprechender Weise wird dabei die Motorhaube, die mit dem Betätigungsmittel wirkverbunden ist, in im Wesentlichen vertikaler Richtung zum Öffnen bzw. Schließen bewegt.

Dies ist insofern von Nachteil, dass die im Wesentlichen vertikale Bewegungsrichtung des Betätigungsmittels eine entsprechende Motorhauben-Anordnung bzw. -Ausbildung voraussetzt, d.h. die Motorhaube muss in analoger Weise im Wesentlichen vertikal bewegbar ausgebildet sein bzw. im Wesentlichen bewegt werden. Hierdurch wird die gestalterische Freiheit z.B. der Motorhauben-Anordnung bzw. die Ausbildung der Motorhaube an sich eingeschränkt, d.h. die bekannten Vorrichtungen zum Aktivieren und Deaktivieren einer Start-Stopp-Automatik eines Fahrzeugs sind nur bedingt flexibel einsetzbar.

Aufgabe der Erfindung ist es daher, ein Fahrzeug mit einer Vorrichtung zum Aktivieren und Deaktivieren einer Start-Stopp-Automatik bereitzustellen, die mit einfachen konstruktiven Maßnahmen flexibel einsetzbar ist.

Zur Lösung der Aufgabe wird ein Fahrzeug mit einer Vorrichtung zum Aktivieren und Deaktivieren einer Start-Stopp-Automatik des Fahrzeugs mittels einer Motorhaube vorgeschlagen, wobei die Vorrichtung zum Aktivieren und Deaktivieren der Start-Stopp-Automatik ein Betätigungsmittel umfasst.

Erfindungsgemäß ist vorgesehen, dass das Betätigungsmittel mit wenigstens einem Umlenkmittel derart wirkverbunden ist, dass ein horizontales Bewegen der Motorhaube zu der Start-Stopp-Automatik hin und von der Start-Stopp-Automatik weg durchführbar ist.

Aufgrund des Umlenkmittels wird trotz horizontaler Bewegung bzw. horizontalem Bewegen der Motorhaube ein im Wesentlichen vertikales Bewegen des Bewegungsmittels ermöglicht, woraus eine erhöhte Flexibilität der Vorrichtung resultieren kann. Hierdurch kann auch die Gestaltungsfreiheit der Start-Stopp-Automatik bzw. des gesamten Fahrzeugs beeinflusst werden, da es z.B. möglich wird, eine serienmäßig verbaute Start-Stopp-Automatik auch nach aufwendigen Umbauten des Fahrzeugs weiterhin verwenden zu können, was auf die erhöhte Flexibilität der Vorrichtung, insbesondere auf die Ausbildung eines Umlenkmittels daran zurückführbar ist.

Um ein möglichst einfaches und zuverlässiges Aktivieren bzw. Deaktivieren zu ermöglichen, kann in einer besonders vorteilhaften Ausgestaltung der Erfindung vorgesehen sein, dass das Betätigungsmittel als Dorn ausgebildet ist und dass die Start-Stopp-Automatik eine Öffnung umfasst, wobei die Start-Stopp-Automatik durch Bewegung des Dorns in die Öffnung aktivierbar und durch Bewegen des Dorns aus der Öffnung deaktivierbar ist.

In einer weiteren vorteilhaften Ausgestaltung der Erfindung kann vorgesehen sein, dass das Umlenkmittel als federbelastete Wippe ausgebildet ist. Dies stellt eine Möglichkeit dar, ein besonders einfach und sehr wirkungsvolles Umlenkmittel bereitzustellen.

Um etwaige Toleranzen ausgleichen zu können und um somit die Zuverlässigkeit der Vorrichtung zu erhöhen, kann in einer Weiterbildung der Erfindung auch vorgesehen sein, dass das Betätigungsmittel an dem Umlenkmittel durch ein Verstellmittel verstellbar angeordnet ist.

Das Fahrzeug kann als Wohnmobil, Reisemobil oder Reise- oder Freizeitfahrzeug ausgebildet sein.

Aufgrund des Umlenkmittels wird ein im Wesentlichen vertikales Bewegen des Bewegungsmittels durch horizontales Bewegen der Motorhaube ermöglicht, woraus eine erhöhte Flexibilität der Vorrichtung resultieren kann. Hierdurch kann auch die Gestaltungsfreiheit der Start-Stopp-Automatik bzw. des gesamten Fahrzeugs, insbesondere der Motorhaube beeinflusst werden, da es z.B. möglich wird, eine serienmäßig verbaute Start-Stopp-Automatik auch nach aufwendigen Umbauten des Fahrzeugs weiterhin verwenden zu können, was auf die erhöhte Flexibilität der Vorrichtung zurückführbar ist.

Dies ist weiterhin insofern besonders vorteilhaft, da das Fahrzeug als vollintegriertes Wohnmobil ausgebildet werden kann.

Insbesondere bei vollintegrierten Wohnmobilen kann somit aufgrund deren spezieller Ausgestaltung der Motorhaube bzw. Motorhauben-Kinematik, die horizontal bewegbar ist, um geschlossen bzw. geöffnet zu werden, eine serienmäßig im Motorraum verbaute Start-Stopp-Automatik mittels einer geänderten Kinematik verwendet werden. Umbauten der Start-Stopp-Automatik sind somit nicht erforderlich. Die Start-Stopp-Automatik wird durch Schließen der Motorhaube aktiviert ist und durch Öffnen der Motorhaube deaktiviert. Dabei erfolgt eine horizontale Bewegung der Motorhaube in dessen Folge eine im Wesentlichen vertikale Bewegung des an der Vorrichtung angeordneten Betätigungsmittels erfolgt. Diese Bewegungsänderung wird durch das Umlenkmittel ermöglicht.

Im Weiteren wird die Erfindung anhand von Zeichnungen näher beschrieben. Hierbei zeigt:
- Fig. 1:: eine stark vereinfachte schematische Darstellung erfindungsgemäßen Vorrichtung;
- Fig. 2:: eine perspektivische Darstellung einer erfindungsgemäßen Vorrichtung in einer ersten Positionierung;
- Fig. 3:: die in Fig. 1 gezeigte Vorrichtung in einer zweiten Positionierung;

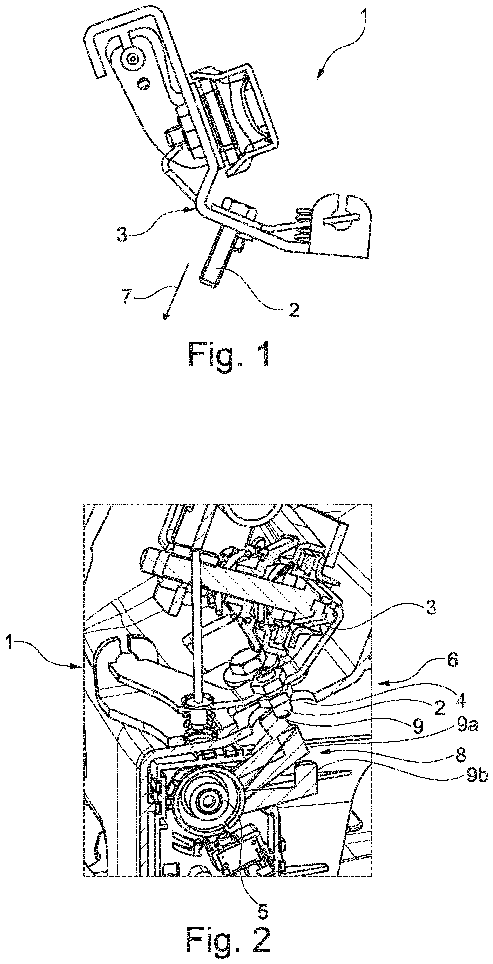

Fig. 1 eine stark vereinfachte schematische Darstellung einer erfindungsgemäßen Vorrichtung 1. Die Vorrichtung 1 ist zum

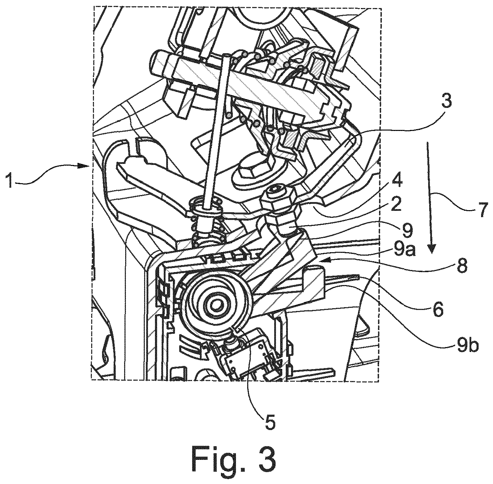

Aktivieren und Deaktivieren einer Start-Stopp-Automatik (siehe Fig. 2, 3) eines Fahrzeugs (nicht dargestellt) ausgebildet und vorgesehen. Die Vorrichtung 1 umfasst zum Aktivieren und Deaktivieren der Start-Stopp-Automatik ein Betätigungsmittel 2. Die Vorrichtung 1 ist mit einer Motorhaube (nicht gezeigt) wirkverbunden.

Weiterhin ist das Betätigungsmittel 2 mit einem Umlenkmittel 3 derart wirkverbunden, dass ein horizontales Bewegen einer Motorhaube (nicht gezeigt) dazu führt, dass das Betätigungsmittel 2 in einer im Wesentlichen vertikalen Richtung, entsprechend der Bewegungsrichtung 7 zu der Start-Stopp-Automatik (siehe Fig. 2, 3) hin bewegbar und von der Start-Stopp-Automatik (siehe Fig. 2, 3) wegbewegbar ist. Horizontale Bewegungen bzw. Bewegungsrichtungen (nicht gezeigt) sind dabei so zu verstehen, dass sie im Wesentlichen senkrecht bzw. orthogonal zu der Bewegungsrichtung 7 orientiert sind bzw. erfolgen.

Im gezeigten Ausführungsbeispiel ist das Betätigungsmittel 2 als Dorn ausgebildet. Das Umlenkmittel 3 ist als federbelastete Wippe ausgebildet.

In der Fig. 2 ist eine perspektivische Darstellung der Vorrichtung 1 in einer ersten Positionierung gezeigt. Hierbei ist anzunehmen, dass die Start-Stopp-Automatik 5 in einem Motorraum 6 eines nicht näher gezeigten Fahrzeugs angeordnet ist. Das Fahrzeug umfasst entsprechend eine nicht näher gezeigte Motorhaube, mittels der die Start-Stopp-Automatik 5 aktivierbar bzw. deaktivierbar ist.

In der Darstellung gemäß Fig. 2 ist die Start-Stopp-Automatik 5 deaktiviert, wenn die Motorhaube in einem geöffneten Zustand vorliegt, der in der hier gezeigten ersten Positionierung vorliegt. Bei einer deaktivierten Start-Stopp-Automatik 5 ist das Betätigungsmittel 2 nicht in Wirkkontakt mit der Start-Stopp-Automatik 5, d.h. es ist nicht weit genug innerhalb der Öffnung 4 angeordnet.

Bei einer deaktivierten Start-Stopp-Automatik 5 ist ein versehentliches Starten des Motors unterbunden, wodurch etwaige Unfallgefahren hierdurch ausgeschlossen werden können. Eine deaktivierte Start-Stopp-Automatik 5 kann im Sinne der Erfindung als Zündunterbrechung aufgefasst werden.

In der Fig. 3 ist eine perspektivische Darstellung der Vorrichtung 1 in einer zweiten Positionierung gezeigt. Gleichermaßen ist hierbei davon auszugehen, dass die Start-Stopp-Automatik 5 in einem Motorraum 6 eines nicht näher gezeigten Fahrzeugs angeordnet ist. Das Fahrzeug umfasst entsprechend eine nicht näher gezeigte Motorhaube, mittels der die Start-Stopp-Automatik 5 aktivierbar bzw. deaktivierbar ist.

In der Darstellung gemäß Fig. 3 ist die Start-Stopp-Automatik 5 aktiviert, wenn die Motorhaube in einem geschlossenen Zustand vorliegt, der in der hier gezeigten zweiten Positionierung vorliegt. Bei einer aktivierten Start-Stopp-Automatik 5 ist das Betätigungsmittel 2 in Wirkkontakt mit der Start-Stopp-Automatik 5, so dass gemäß obigen Ausführungen die genannte Zündunterbrechung nicht mehr vorliegt.

Um die Start-Stopp-Automatik 5 zu aktivieren, erfolgt eine horizontale Bewegung der Motorhaube. Die mit der Motorhaube wirkverbunden angeordnete Vorrichtung 1, die ein Umlenkmittel 3 umfasst, ermöglicht, dass das mit der Vorrichtung 1 wirkverbundene Betätigungsmittel 2 im Wesentlichen vertikal weit genug in die Öffnung 4 bewegbar ist. In nicht näher gezeigter Art und Weise kann ein Verschließmittel ermöglichen, dass die Motorhaube verschlossen bleibt und damit, dass die Start-Stopp-Automatik 5 aktiviert bleibt.

Zum verbesserten Verständnis ist in der Fig. 2 und in der Fig. 3 dargestellt, dass das Betätigungsmittel 2 zur Aktivierung bzw. zur Deaktivierung der Start-Stopp-Automatik 5 mit einem Ausleger 8 interagiert. Hierbei sind jeweils verschiedene Zustände 9, 9a, 9b des Auslegers 8 dargestellt. Diese Zustände 9, 9a, 9b des Auslegers 8 können auch als unterschiedliche Positionierungen des Auslegers 8 aufgefasst werden. So ist der Ausleger 8 in dem Zustand 9b sozusagen in einer untersten Positionierung bzw. Stellung und in dem Zustand 9 in einer obersten Positionierung bzw. Stellung. In dem Zustand 9a ist der Ausleger 8 in einer entsprechenden Zwischenstellung angeordnet, die einen Bewegungsablauf des Auslegers 8 darstellen soll.

### Bezugszeichenliste:

- 1: Vorrichtung
- 2: Betätigungsmittel
- 3: Umlenkmittel
- 4: Öffnung
- 5: Start-Stopp-Automatik
- 6: Motorraum
- 7: Vertikale Bewegungsrichtung
- 8: Ausleger
- 9: Zustand
- 9a: Zustand
- 9b: Zustand

## Patentansprüche

1. Fahrzeug, wobei das Fahrzeug eine Start-Stopp-Automatik (5) umfasst, die Start-Stopp-Automatik (5) innerhalb eines Motorraums (6) des Fahrzeugs angeordnet ist und das Fahrzeug eine Vorrichtung (1) zum Aktivieren und Deaktivieren der Start-Stopp-Automatik (5) mittels einer Motorhaube umfasst sowie die Vorrichtung (1) ein Betätigungsmittel (2) umfasst,
**dadurch gekennzeichnet,**
**dass** das Betätigungsmittel (2) mit wenigstens einem Umlenkmittel (3) derart wirkverbunden ist, dass ein horizontales Bewegen der Motorhaube zu der Start-Stopp-Automatik (5) hin und von der Start-Stopp-Automatik (5) weg durchführbar ist.

2. Fahrzeug nach Anspruch 1,
**dadurch gekennzeichnet,**
**dass** das Betätigungsmittel (2) als Dorn ausgebildet ist und dass die Start-Stopp-Automatik (5) eine Öffnung (4) umfasst, wobei die Start-Stopp-Automatik (5) durch Bewegung des Dorns in die Öffnung (4) aktivierbar und durch Bewegen des Dorns aus der Öffnung (4) deaktivierbar ist.

3. Fahrzeug nach Anspruch 1 oder 2,
**dadurch gekennzeichnet,**
**dass** das Umlenkmittel (3) als federbelastete Wippe ausgebildet ist.

4. Fahrzeug nach einem der Ansprüche 1 bis 3,
**dadurch gekennzeichnet,**
**dass** das Betätigungsmittel (2) an dem Umlenkmittel (3) durch ein Verstellmittel verstellbar angeordnet ist.

5. Fahrzeug nach einem der vorhergehenden Ansprüche, wobei das Fahrzeug als Wohnmobil, Reisemobil oder Reise- oder Freizeitfahrzeug ausgebildet ist.

## Claims

1. Vehicle, wherein the vehicle comprises an automatic start-stop system (5), the automatic start-stop system (5) is arranged within an engine compartment (6) of the vehicle and the vehicle comprises a device (1) for activating and deactivating the automatic start-stop system (5) by means of a hood and the device (1) comprises an actuating means (2),
**characterised in that**
the actuating means (2) is operatively connected to at least one redirecting means (3) in such a way that horizontal movement of the hood towards the automatic start-stop system (5) and away from the automatic start-stop system (5) can be carried out.

2. Vehicle according to claim 1,
**characterised in that**
the actuating means (2) is designed as a mandrel and **in that** the automatic start-stop system (5) comprises an opening (4), wherein the automatic start-stop system (5) can be activated by moving the mandrel into the opening (4) and can be deactivated by moving the mandrel out of the opening (4).

3. Vehicle according to claim 1 or 2,
**characterised in that**
the redirecting means (3) is designed as a spring-loaded rocker.

4. Vehicle according to one of claims 1 to 3,
**characterised in**
**that** the actuating means (2) is arranged on the redirecting means (3) so as to be adjustable by an adjusting means.

5. Vehicle according to one of the preceding claims, wherein the vehicle is a motorhome, camper van or travel or recreational vehicle.

## Revendications

1. Véhicule, dans lequel le véhicule comprend un système d'arrêt-démarrage automatique (5), le système d'arrêt-démarrage automatique (5) est agencé à l'intérieur d'un compartiment moteur (6) du véhicule, et le véhicule comprend un dispositif (1) d'activation et de désactivation du système d'arrêt-démarrage automatique (5) au moyen d'un capot moteur et le dispositif (1) comprend un moyen d'actionnement (2),
**caractérisé en ce que**
le moyen d'actionnement (2) est lié de manière fonctionnelle à au moins un moyen de renvoi (3) de telle sorte qu'un déplacement horizontal du capot moteur peut être effectué en direction du système d'arrêt-démarrage automatique (5) et en éloignement du système d'arrêt-démarrage automatique (5).

2. Véhicule selon la revendication 1,
**caractérisé en ce que**
le moyen d'actionnement (2) est réalisé en tant que broche, et **en ce que** le système d'arrêt-démarrage automatique (5) comprend une ouverture (4), dans lequel le système d'arrêt-démarrage automatique (5) peut être activé par un déplacement de la broche dans l'ouverture (4) et peut être désactivé par un déplacement de la broche hors de l'ouverture (4).

3. Véhicule selon la revendication 1 ou 2,
**caractérisé en ce que**
le moyen de renvoi (3) est réalisé en tant que bascule sollicitée par ressort.

4. Véhicule selon l'une quelconque des revendications 1 à 3,
**caractérisé en ce que**
le moyen d'actionnement (2) est agencé de manière réglable au niveau du moyen de renvoi (3) via un moyen de réglage.

5. Véhicule selon l'une quelconque des revendications précédentes, dans lequel le véhicule est réalisé en tant que camping-car ou véhicule de voyage ou de loisir.
